# EUROPEAN PATENT SPECIFICATION

(11) **EP 1 482 232 B1**
(45) Date of publication and mention of the grant of the patent: **03.01.2007**
(21) Application number: 03012408.5
(22) Date of filing: 30.05.2003
(51) Int. Cl.: F16L 41/04, F16L 41/06, F16L 41/16

(54) **Subsoil valve for branching a water pipeline from a municipal water system pipe**
Untergrundventil zur Abzweigung einer Wasserleitung von einer städtischen Wasserleitung
Sous-sol soupape pour la dérivation d'une conduite d'eau d'un aqueduc

(43) Date of publication of application: 01.12.2004
(73) Proprietor: FIMCIM S.r.l., I-20121 Milano (MI) (IT)
(72) Inventor: Cimberio, Renzo, 28017 S. Maurizio d'Opaglio (NO) (IT)
(74) Representative: Zanella, Ireneo

(56) References cited:
- DE-A- 2 515 235
- DE-A- 19 605 728
- FR-A- 2 820 487
- US-A- 5 348 045

## Description

### Background of the invention

The present invention relates to a subsoil valve for branching a water pipeline from a municipal water system pipe according to the preamble of claim 1.

As it is known for the subsoil branching of a water pipeline from a municipal water system pipe or from a deep laying pipeline it is usual to preliminarly tightly apply to said pipeline a collar having a connecting union with which is then screwed a valve, for example a valve having to orthogonal outlet unions as disclosed for example in the FR 2 552 842 A.

The valve 1 disclosed in said FR 2 552 842 A and illustrated in figures 1, 2 and 3 has a valve body 2 formed by two body-halves 2A and 2B with three equal unions 3, 4 and 6, wherein two unions 3, 6 are coaxial and the union 4 is orthogonal with respect to said unions 3, 6, that is forming a T-shape with the latter. An assembly formed by a control rod 16 for the rotation of a ball shutter 8 can be screwed at choice in one of said three unions 3, 4 and 6. The shutter 8 is housed in a chamber 7 provided inside the valve body 2 in the intersection zone of a throughgoing hole 5 and a hole 5a orthogonal to the latter, that is forming a T-shape with said hole 5. The shutter has, in turn, a throughgoing hole 9 and a a hole 11 which is orthogonal to the latter and opens out, at one end, in said throughgoing hole 9 and, at the other end, outside the ball shutter 8. On the shutter 8 are provided two seats 12, 13 for housing the internal control rod end 14, and placed the one 12 opposite to said throughgoing hole 9 and the other 13 opposite to said orthogonal hole 11, so that according to the disposition of said control rod assembly in one of said orthogonal unions 4 and 6 it will be possible to achieve a branched pipeline 24 (shown with dashed line) which is either straight/vertical or angled/horizontal with respect to said municipal water system pipe 22.

The provision of both orthogonal valve unions 4, 6 allows further to drill the municipal water system pipe 22 by means of a drill 23 guided through said throughgoing hole 9 of the ball shutter 8 after having tightly fitted the valve 1 on said municipal water system pipe 22 by means of a sealing collar 21 as illustrated above.

In said FR 2 552 842 A is neither stated nor suggested any external rotation control element for the rotation of the control rod 16.

It is further known a valve of the considered type in which the valve body is a one-piece body having a threaded union to be connected with the sealing collar fitted onto the municipal water system pipe and two further equal unions, the first coaxial to said threaded union and the second angled, that is orthogonal to said first union. In this valve in said two equal unions may be screwed two internal and interchangeable locking nuts and, in turn, in each of said locking nuts is housed an external locking nut, wherein in one of said external locking nuts is tightly housed the control rod the external control end of which projects from said locking nut whereas the other locking nut houses known sealing means acting against said branched water pipeline, wherein as stated above both said external locking nuts are mutually interchangeable.

Said valve is further provided with a cap having a square cross-section or "square" which can be placed onto the projecting control rod end and, in turn, can be engaged by a control wrench, wherein said cap has a rotation limitation stop in the form of a strip bent at 90° which during the rotation of the shutter cooperates with two stops which are integrally formed in the valve body and define a 90° of the shutter. Said cap is connected in a fixed, that is not removable manner with the projecting external control end by means of a transverse immovable pin, so that said cap and the control rod practically form a one-piece assembly.

The known valves present several disadvantages and shortcomings.

Due to the fact that the control rod and the cap practically form a one piece assembly, when, after having fitted the valve onto the municipal water system pipe, a translation of the control rod from a valve union to the other valve union is to be done, it will be necessary to manually rotate the external locking nut housing the control rod, wherein said external locking nut to this purpose is provided with an external crown having the shape of a gear wheel.

The presence of said cap bent strip which covers at a small distance said gear-like external crown slows down and makes difficult the manually rotation of said external locking nut both for a disassembling from a valve union as well as for the assembling of said locking nut into the other valve union.

This is particularly troublesome for the following reasons:
- the manipulation for said control rod translation from a valve union to the other valve union is carried out when it is wished, as usually required, to place the branched pipeline parallel to the municipal water system pipe, and
- said rotation manipulation takes place under uncomfortable and difficult conditions in a small room and at a depth of about 1,5 - 2 m as usually in Italy, and at greater depths in other European countries, for example at a depth of about 5 - 6 m in countries having a severe climate, like in Norway, in order to avoid a valve locking due to the frost.

Due to the fact that said two stops on the valve body are provided in the form of projecting small blocks it is further possible to apply the known cap, that is the assembly formed by the external locking nut and the control rod, in a wrong position allowing a rotation of about 250° instead of a rotation of 90° so that the shutter is no more positionable in a stable manner neither in the closed position nor in the open position.

It is further stressed that in order to satisfy the possible different requirements concerning the connection of the valve with the different provided connection seats, for example male or female unions and/or unions having the commonly used different thread types, it is at present necessary to manufacture and keep in stock a number of different valve bodies, which increases the costs and makes difficult not only the manufacturing but also the keeping in stock by the sellers and installers.

The known valves are not further fit to be installed at the great above mentioned depths of 5 - 6 m which latter require the use of special long, for example telescopic, wrenches.

A further disadvantages of the known valves is to be seen in the fact that the zone between the cap and the valve body forms a receptacle facilitating the deposit of mud and dirt.

A not last disadvantage of the known valves is that said valves allow only one either right-hand or left-hand closing direction of rotation.

The document FR-A-2 820 487 discloses a subsoil valve the relevant features of which are set forth in the preamble of claim 1.

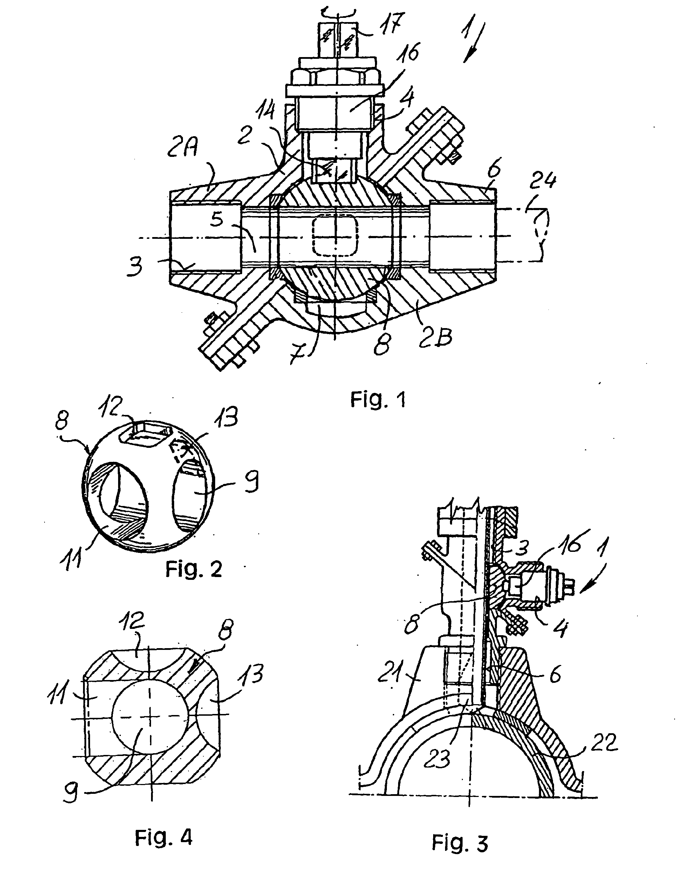

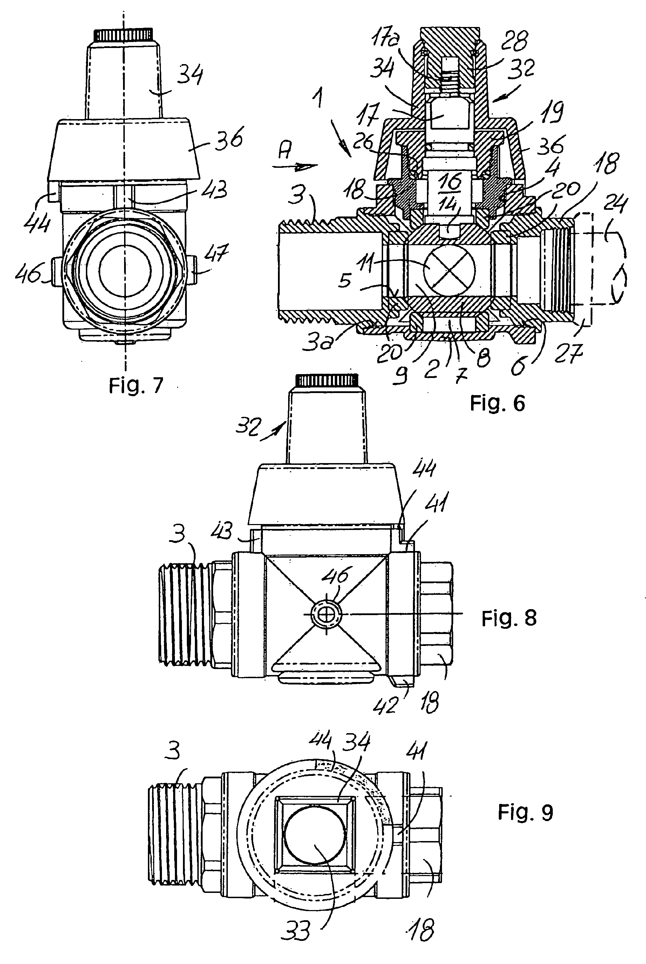

In this valve a cap 19 is coupled with the projecting end of the control rod 21 by means of a transversal pin (shown without numeral reference for example in the figures 2, 3b and 8), wherein in a further embodiment a spring 37 is inserted between said cap 19 and said control rod 21 (as shown for example in figure 9a).

Therefore, after connecting said cap 19 with said control rod 21 by means of said transversal pin the obtained assembly cap/control rod is equivalent to a no more removable one-piece assembly, wherein after assembling the cap and the control rod are no more separable manually or by using wrench in order to be transferred separately from one valve union into the other valve union as provided in the present invention. With the latter after an easy removal of the cap 32 by unscrewing the direct accessible nut 28 from the screwed tang 17a and subsequently the external locking nut 19 are freely accessible for the easy mutually interchangeable transfer of the external locking nuts 19 from a valve union to the other one, respectively.

On the contrary, according to the teaching of FR-A-2 820 487, after assembling said cap-control rod assembly 19, 21 can not be practically disassembled and involves the drawbacks and excludes the achievement of the advantages set forth in the introductory part of the present invention as well as prevents a solution of the aim thereof.

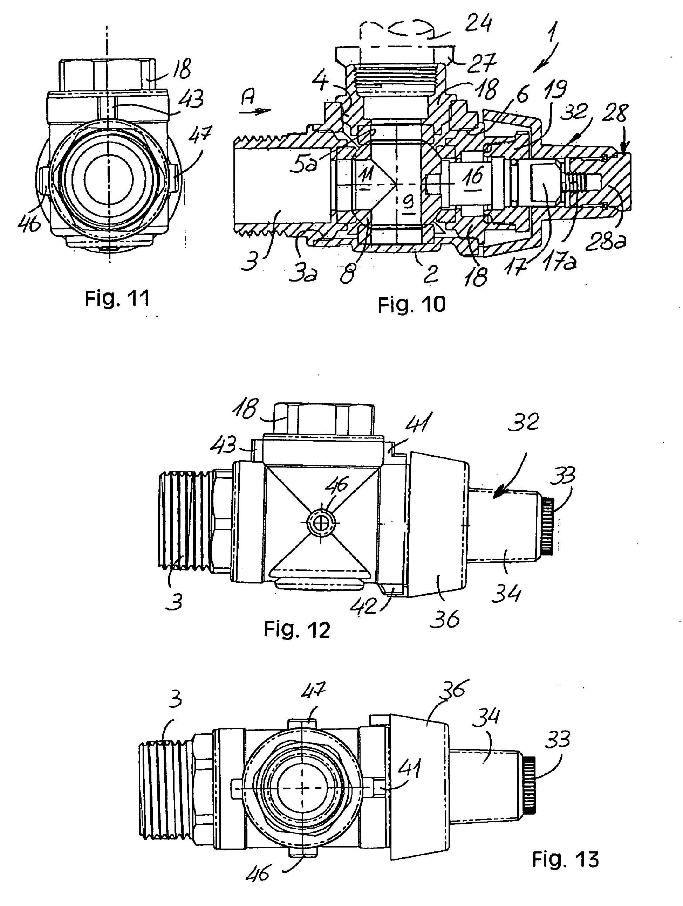

US-A-5 348 045 discloses a pipe clamp for plastic supply pipeline, particularly a tapping clamp, in several embodiments. As inferable for example from figures 7 and 10 the connection of the cap 60 with the control rod 54 is accomplished with a cylindrical nut 58 the threaded hole 76 of which is engaged with a threaded tang provided at the external end of said control rod 54, wherein the head or top of said nut 58 is smaller than the cross section of the cap and is located inside said cap 60. It is obvious that the combination of these features in itself and the fact that said cap is not rotatable but welded with the T-piece pipe 12 of upper shall 10 can not lead to any solution of the aim of the present invention.

DE-A-196 05 728 discloses a branching valve having a connection union which is connectable with a water system pipe and is provided as a threaded union removably connectable with the valve body, whereby the valve body represents a modular valve body.

DE-A- 2515 235 discloses a branching valve 2 having a flange 10 for temporally supporting by means of screws a hollow body 31 tightly housing the drill 7 of a drilling machine in order to drill the pipe 1, as shown in figures 8 and 9. After drilling said hollow body 31 is removed.
On the contrary, the positioning box-like component 48 provided in the present invention should be permanently assembled onto the valve body by laterally provided fastening screws 46a, 47a, and the top of said component 48 does not present any gasket but an opening which houses a wrench with clearance.

### Summary of the invention

Accordingly, the aim of the present invention is to provide a subsoil branching valve which allows to overcome the stated disadvantages and drawbacks of the known valve without requiring neither a greater number of components nor greater overall dimensions.

According to the present invention, the above mentioned aim is achieved by a subsoil valve for branching a water pipeline from a municipal water system pipe having the features of claim 1.
Farther advantageous developments and embodiments of the subsoil branching valve according to the invention are inferable from the dependent claims.
The suggested removable connecting means between the cap and the control rod may be manufactured and handled in a simple manner, may be easily manually grasped and do not hinder at all the application of a control wrench on the valve cap.
The proposed fastening means between the cap and the control rod are provided in a not to be lost manner.

According to the teaching of claim 2 the cap is designed in a way that reliably avoids any deposition of mud or dirt in the control room of the valve shutter.
Advantageously an embodiment of the threaded valve union is suggested which is provided as a separate that is removable threaded union so that the valve body becomes a modular body to which the respective requested threaded union can be fastened.
For accomplishing a comfortable fitting at a great depth claim 3 teaches to provide in the valve body a pair of positioning projections facilitating an easy coupling with the valve body of a box-like component preferably made of plastic and allowing an easy application of a necessary long special control wrench, for example of a telescopic wrench.
The subsoil valve according to the present invention provides a lot of important advantages.

At first, an extremely facilitated translation manipulation of the valve shutter from the one valve union to the other valve union is achieved, wherein the separation between cap and assembly formed by an external locking nut and control rod may be manually accomplished in a easy and quick manner without any obstacle through said cap. This is possible by providing a freely accessible axial connection.
Said axial connection is easily accomplished as a nut which may be housed in the cap in a not to be lost way, which is very important when considering the illustrated difficult manipulation and fitting conditions of said valves.
A further important advantage is that the shutter rotation limiting stops are placed at a distance of 180° instead of 90° and with a stop on the cap which extends for 90° less the thickness of a small block-like, which assures a reliable rotation of 90° of the ball shutter and avoids a wrong fitting of said shutter in both valve unions.
A dirt or mud deposit in the zone around the shutter, that is the cap, is surely avoid by the bell-like configuration of the cap.
It is further possible to reduce the manufacturing costs and avoid problems concerning the keeping on stock for both the valve manufacturer and the sellers and installers because the valve connecting threaded union is provided as a removable union so that it can be provided a single modular valve body to which -- in an interchangeable manner -- the respective connecting union may be connected. This allows, therefore, to reduce the general costs and, indirectly, the valve cost.

### Brief description of the drawings

Further characteristics, advantages and details of the subsoil branching valve according to the present invention will become more apparent hereinafter from the following disclosure with reference to the accompanying drawings, in which is shown a preferred inventive embodiment of the subsoil valve according the present invention.

In the drawings:
Figure 1 is a middle longitudinal section through a prior art valve;
Figure 2 is a perspective view of the ball shutter of the prior art valve of Figure 1;
Figure 3 is a detail view as a half front view and a half sectional view showing how a valve of the considered type is applied on a municipal water system pipe;
Figure 4 is a cross-sectional view through a ball shutter which is similar to the known ball shutter of Figure 2 and may be used in valves according to the present invention;
Figure 5 shows the assembling of a subsoil branching valve according to the present invention onto a municipal water system pipe;
Figure 6 is a middle longitudinal sectional view through a subsoil valve according to the present invention having an axial or straight water flow outlet, wherein the shutter is shown in the open position;
Figures 7, 8 and 9 show a front view as seen according to the arrow A in Figure 6, a side view and a top plan view of the valve of Figure 6, respectively;
Figure 10 is a middle longitudinal sectional view through the valve according to the invention of Figure 6 in an embodiment having an angled water flow outlet, wherein the shutter is shown in the open position;
Figures 11, 12 and 13 show a front view as seen according to the arrow A in Figure 10, a side view and a top plan view of the valve of Figure 10;
Figure 14 is a detail of a sectional view and in enlarged scale of the removable coupling means between cap and control rod of the valve according to the invention;
Figure 15 shows the subsoil branching valve according to the invention in the embodiment for big depths, wherein the wrench guiding housing is shown in a pre-assembling position; and
Figure 16 is a middle vertical sectional view along the assembled valve of Figure 15 in the assembled position.

### Description of the preferred embodiment

The valve disclosed in FR 2 552 842 A and shown in Figures 1 to 3 has been shortly described in the introductory part.
From Figure 3 it is further inferable that for fitting the subsoil valve 1 onto a municipal water system pipe 22 on the latter is previously tightly placed a collar 21 in which is then screwed a union of the valve 1, for example the male union 6 as shown. Having the control rod 16 in the angled union 4 and the ball shutter having the throughgoing hole 9 in the open position it will be possible to insert a drill 23 into the valve and drill the municipal water system pipe 22. After having extracted the drill 23 and rotated the ball shutter 8 in the closed position it will be possible to connect a branched water pipeline 24 with the valve union 3 and fix the latter with a known external locking nut and common locking means, not shown.
If an angled outlet pipeline 24, that is a water pipeline connected with the valve union 4 is wished so it will be necessary, while maintaining the shutter 8 in the closed position, to move from the union 4 into the union 3 the assembly formed by the external locking nut 19, control rod 16 with associated cap, not shown in the Figures 1 and 3, wherein in doing said translation of the control rod 16 above described disadvantages are encountered.

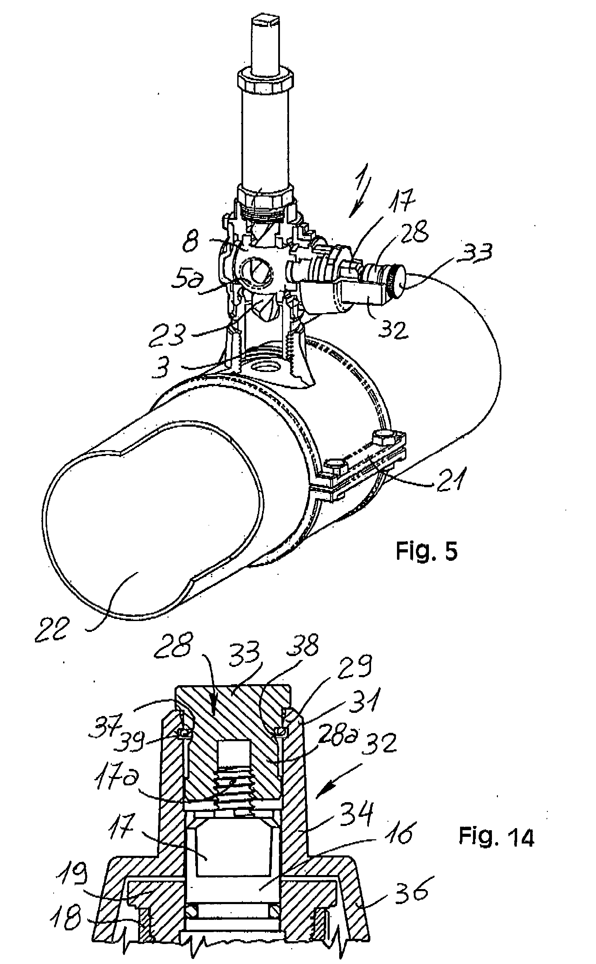

Reference is now made to Figures 4 to 16 showing the valve according to the present invention, wherein components equal or similar to corresponding components of the known valve are denoted by the same numeral references.

As inferable from Figures 4 to 16 the valve 1 has a valve body 2 having a threaded union 3 for the connection with a collar 21 to be tightly fixed in a known manner to a municipal water system pipe 22 which normally lays at a remarkable depth of, for example in Italy, 1,5 to 2 m. The valve body 2 is further provided, in a known manner, with two equal unions 4 and 6 each housing an equal internal threaded locking ring or locking nut 18 which latter are, therefore, interchangeable. In one internal locking nut 18 is housed a control rod 16 the internal end 14 of which is housed in a seat 12 of the ball shutter 8. Said control rod 16 is housed in and positioned by an external threaded locking ring or locking nut 19, as may be clearly seen from the drawings, wherein an O-ring is denoted by 26. With a dotted line is shown a second external threaded locking ring or locking nut 27 which is interchangeable with the first external locking nut 19 and house known, not illustrated, clamping means for blocking the branched pipeline 24 shown by a dashed line.

As inferable from the Figures 6, 10 and 16 the ball shutter 8 is supported by four gaskets 20 which are by pairs diametrically opposite, as shown.

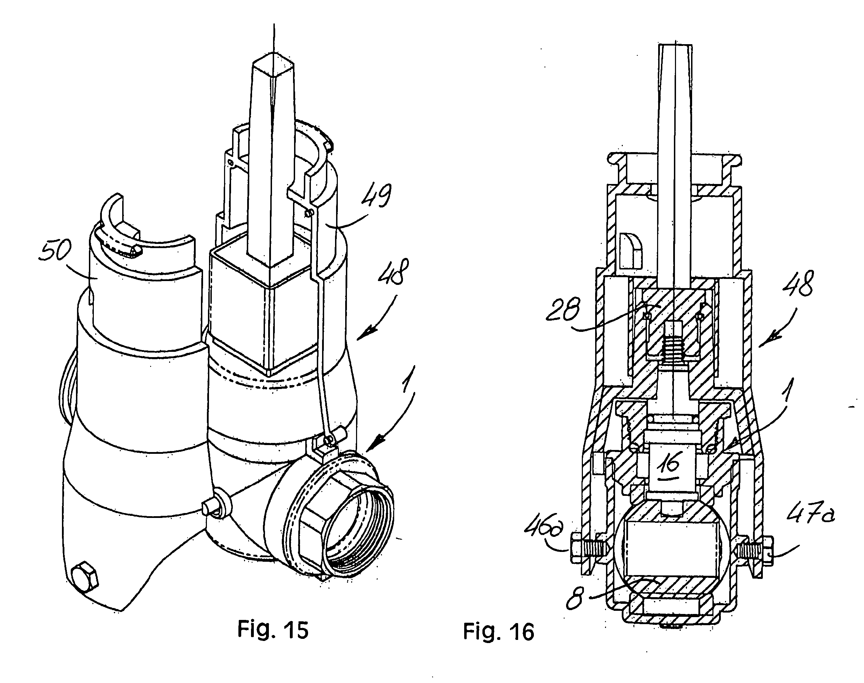

The valve body 2 may be formed in one piece with the connecting union 3, as in itself known, or preferably, as illustrated, said connecting union 3 is provided as a removable union which can be screwed in a union 3a of the valve body, wherein said union 3a is equal to the other two unions 4 and 6 of the valve 1. In this case the valve body 2 always has the same configuration, that is it is a modular body. The connecting union 3 can be formed in one of the several usually required embodiment, for example as a male union, a female union or a union provided with one of the different used thread types.
Coming back to the control rod 16 the latter has at his square projecting end 17 an axial screwed tang 17a with which may be screwed a nut 28 having a cylindrical body 28a going through a hole 29 provided in the bottom 31 of a cap denoted by 32. The head of said nut 28 is denoted by 33 and the latter is external with respect
to said cap 32. The head 33 may by circular or polygonal, it is, however, smaller then said bottom 31 of the cap 32 in order to freely allow the application of a wrench on the cap, that is on the square part 34 thereof.
As shown in the drawings said cap 32 has at the bottom thereof a bell-shaped part 36 which surrounds the external 19 and internal 18 locking nuts housing the control rod 16, as far as near the valve body 2, while practically isolating from the outside environment the assembly formed by said two locking nuts 18, 19 housing the control rod 16.
From the Figures 4, 6, 10 and 14 it is further inferable that an elastic ring 37 housed in a groove 38 in the body 28a of the nut 28 is able to widen into a circular groove 39 in said cap 32 while allowing in this way an axially freely movable support of said nut 28 in a not to be lost way.
According to the invention the stops 41, 42 and 41, 43 defining the 90° rotation of the shutter 8 irrespective from the assembling of the locking nut assembly housing the control rod 16 in the one or the other union 4, 6 are provided at a distance of 180° instead of at a distance of 90° as provided for in the known valves.
The stop provided on the cap 32 is denoted by 44 and has a circumferential extension of 90° less the thickness of the stops 41, 42 and 43, and it is shown by means of a made black surface. Said stops 44 of the cup 32 will, therefore, cooperate with the stop 41, 43 in the position of the cap illustrated in Figure 6, whereas when the control rod 16 containing assembly is placed in the position illustrated in figure 10 said stop 44 of the cap 32 will cooperate with the stops 41 and 42.
Two positioning stops housing a screw 46a and 46b, respectively, of a component 48 in the form of a box in two parts 49 and 50, for example made of plastic, as shown in Figures 15 and 16 are denoted by 46 and 47, wherein said box has the task of facilitating the application of a long special wrench, for example a telescopic one, in the case of mounting the valve 1 at a great depth of, for example 5 - 6 m, as stated in the introductory part.
In the practical use for a subsoil fitting of the valve 1 according to the present invention on a municipal water system pipe 22 and for the application of a branched water pipeline 24 thereon one will proceed at first as stated above in relation with the known valves, wherein the transfer of the control rod 16 from the union 4 to the union 6 will however takes place previous physical separation between control rod 16 and cap 32 through screwing out the nut 28 from the screwed tang 17a, wherein said nut 28 remain housed in the cap 32 in a not to be lost way.
Under such conditions the external locking nut 19 tightly containing the locking nut 16 and the external locking nut 27, which contains known fixing means of the branched pipeline 24, will be removed and mutually exchanged, and subsequently said cap 32 will be put on the external end 17 of said control rod 16 and fixed on the latter by tighten the nut 28, all this with a simple and quick manipulation also under difficult and uncomfortable conditions as illustrated above.
It is further stressed that the free manipulation of the control rod 16 removed from the cap 32 also facilitate a quick coupling of the internal end 14 of said control rod into the respective seat 12 or 13.
In the case of grater depths of 5 - 6 m as provided for example in Norway, the box component 48 will be applied on the valve body 2 and correctly positioned through engagement between the screws 46a and 47a with the stops 46, 47, wherein said component 48 acts as an help for facilitating the correct positioning of the special not shown wrench, for example a telescopic wrench, as utilized in such cases.
From the above constructional and functional disclosure of the subsoil branching valve according to the present invention, it should be apparent that with the latter it is possible to efficiently achieve the mentioned objects and advantages.
In practicing the invention, one skilled in the art can design further modifications and variations, as well as equivalent solutions of the single components, without departing from the scope of the invention as claimed in the appended claims.

## Claims

1. A subsoil valve (1) adapted to branch a water pipeline (24) from a municipal water system pipe (22) comprising a valve body (2) having
- a straight throughgoing hole (5) and a hole (5a) orthogonal to the latter which define a T-shaped configuration, and a common chamber (7) housing a ball shutter (8),
- a valve connecting union (3) for connecting said valve to a support collar (21) to be tightly clamped onto said water system pipe (22), as well as
- two equal valve unions (4, 6) for housing a respective internal locking nut (18) in which may be screwed a respective external locking nut (19, 27), wherein said external locking nuts (19, 27) are mutually interchangeable,
- wherein in an external locking nut (19) is tightly housed the control rod (16) controlling said ball shutter (8), said control rod (16) projecting with its coupling external end (17), whereas
- in the other external locking nut (27) is housed a sealing means able to secure said branched water pipeline (24) inserted in the subsoil valve (1),
- wherein said ball shutter (8) has a throughgoing hole (9) and a transverse hole (11) orthogonal to the latter and opening out at one end in said throughgoing hole (9) and, at the other end, outside the shutter as well as two external seats (12, 13) in which may be housed at choice the internal end (14) of said control rod (16), wherein said seats (12, 13) are provided the one (12) opposite to said throughgoing hole (9) and the other (13) opposite to said transverse hole (11), as well as
- a cap (32) which is coupled with the projecting end (17) of the control rod (16) and provided with a projection adapted to engage stop elements provided on the valve body (2) and defining an accurate 90° rotation of the shutter (8),
**characterized in that** said cap (32) is removable connectable with said control rod (16) by means of a cylindrical nut (28), the threaded hole of which is engaged with a threaded tang (17a) provided at the external end (17) of said control rod (16), wherein the head (33) of said nut (28) is external with respect to said cap (32) and is smaller then the cross-section of the square part (34) of the cap (32), and wherein said fixing nut (28) is housed in said cap (32) in a not to be lost manner.

2. A valve according to Claim 1, **characterized in that** the lower part (36) of said cap (32) is bell-like shaped and extends without contact between said control square part (34) and the valve body (2).

3. A valve according to Claim 1, **characterized in that** outside on the valve body (2) are provided two stops (46, 47) adapted to respectively house a screw (46a, 47a) of a box-like valve component (48) made for example of plastic and serving as a positioning means for the easy positioning of a special control wrench, for example a telescopic wrench, for great installation depths.

## Patentansprüche

1. Untergrundventil (1), welches zum Abzweigen einer Wasserleitung (24) von einem städtischen Wassersystemrohr (22) angepasst ist, mit einem Ventilkörper (2) mit
- einem geraden Durchgangsloch (5) und einem Loch (5a), welches orthogonal zum Durchgangsloch (5) angeordnet ist, die eine T-förmige Ausbildung besitzen, und einer gemeinsamen Kammer (7), die einen Kugelverschluss (8) aufnimmt,
- einer Ventilverbindungseinheit (3) zum Verbinden des Ventils mit einem Stützkragen (21), der dicht auf das Wassersystemrohr (22) klemmbar ist, sowie
- zwei gleichen Ventilanschlüße (4, 6) zum Aufnehmen einer entsprechenden inneren Sicherungsmutter (18), in die eine entsprechende äußere Sicherungsmutter (19, 27) geschraubt werden kann, wobei die äußeren Sicherungsmuttern (19, 27) gegenseitig austauschbar sind,
- wobei in einer externen Sicherungsmutter (19) die Steuerstange (16) dicht aufgenommen ist, wobei die Steuerstange (16) mit ihrem verbindenden externen Ende (17) hervorsteht, während
- in der anderen externen Sicherungsmutter (27) ein Dichtmittel aufgenommen ist, um die abgezweigte Wasserleitung (24) zu sichern, die in das Untergrundventil (1) eingeführt ist,
- wobei der Kugelverschluss (8) ein Durchgangsloch (9) und ein Querloch (11) besitzt, welches orthogonal zum Durchgangsloch (9) angeordnet ist und sich an einem Ende in das Durchgangsloch (9) und an dem anderen Ende außerhalb des Verschlusses öffnet, sowie zwei externen Sitzen (12, 13), in denen wahlweise das innere Ende (14) der Steuerstange (16) aufgenommen sein kann, wobei die Sitze (12, 13) so vorgesehen sind, dass der eine Sitz (12) gegenüber dem Durchgangsloch (9) und der andere Sitz (13) gegenüber dem Querloch (11) vorgesehen ist, sowie
- einer Kappe (32), die mit dem hervorstehenden Ende (17) der Steuerstange (16) verbunden und mit einem Vorsprung versehen ist, der zum Eingreifen in Stoppelemente ausgebildet ist, die an dem Ventilkörper (2) vorgesehen sind und eine genaue 90°-Drehung des Verschlusses (8) definieren,
**dadurch gekennzeichnet, dass** die Kappe (32) mittels einer zylindrischen Mutter (28) entfernbar mit der Steuerstange (16) verbindbar ist, wobei das Gewindeloch der zylindrischen Mutter (28) mit einem Gewindemitnehmer (17a) im Eingriff steht, wobei der Gewindemitnehmer (17a) an dem äußeren Ende (17) der Steuerstange (18) vorgesehen ist, wobei der Kopf (33) der Mutter (28) außerhalb der Kappe (32) liegt und kleiner ist als der Querschnitt des quadratischen Teils (34) der Kappe (32), und wobei die Befestigungsmutter (28) in nicht verlierbarer Weise in der Kappe (32) aufgenommen ist.

2. Ventil nach Anspruch 1, **dadurch gekennzeichnet, dass** der untere Teil (36) der Kappe (32) glockenförmig ausgebildet ist und sich ohne Kontakt zwischen dem recheckigen Steuerteil (34) und dem Ventilkörper (2) erstreckt.

3. Ventil nach Anspruch 1, **dadurch gekennzeichnet, dass** zwei Anschläge (46, 47) außen an dem Ventilkörper (2) vorgesehen sind, wobei die Anschläge (46, 47) dazu ausgebildet sind, eine Schraube (46a, 47a) einer kastenförmigen Ventilkomponente (48) entsprechend aufzunehmen, wobei die Ventilkomponente (48) z. B. aus Kunststoff besteht und als Positioniermittel für die einfache Positionierung eines speziellen Steurschlüssels, z. B. eines teleskopischen Schlüssels, für große Installationstiefen dient.

## Revendications

1. Soupape de sous-sol (1) adaptée pour dériver une conduite d'eau (24) d'un aqueduc du réseau d'eau municipal (22) comprenant un corps de soupape (2) ayant :
- un trou débouchant droit (5) et un trou (5a) orthogonal par rapport à ce dernier qui définissent une configuration en forme de T, et une chambre commune (7) logeant un obturateur à bille (8),
- un raccordement de soupape (3) pour raccorder ladite soupape à un collier de support (21) pour être hermétiquement serré sur ledit aqueduc (22), également
- deux raccords de soupape identiques (4, 6) pour loger un écrou de blocage interne (18) respectif dans lequel peut être vissé un écrou de blocage externe (19, 27) respectif, dans laquelle lesdits écrous de blocage externes (19, 27) sont mutuellement interchangeables,
- dans laquelle dans un écrou de blocage externe (19), est logée de manière serrée la tige de contrôle (16) contrôlant ledit obturateur à bille (8), ladite tige de contrôle (16) faisant saillie avec son extrémité externe de couplage (17), alors que
- dans l'autre écrou de blocage externe (27), sont logés des moyens d'étanchéité pouvant fixer ladite conduite d'eau (24) dérivée, insérée dans la soupape de sous-sol (1),
- dans laquelle ledit obturateur à bille (8) a un trou débouchant (9) et un trou transversal (11) orthogonal à ce dernier et souvent au niveau d'une extrémité dans ledit trou débouchant (9) et au niveau de l'autre extrémité, à l'extérieur de l'obturateur également deux sièges externes (12, 13) dans lesquels peuvent être logés au choix l'extrémité interne (14) de ladite tige de contrôle (16), dans laquelle lesdits sièges (12, 13) sont prévus un (12) opposé audit trou débouchant (9) et l'autre (13) opposé audit trou transversal (11), ainsi que
- un capuchon (32) qui est couplé avec l'extrémité en saillie (17) de la tige de contrôle (16) et prévu avec une saillie adaptée pour mettre en prise des éléments de butée prévus sur le corps de soupape (2) et définissant une rotation précise à 90° de l'obturateur (8),
**caractérisée en ce que** ledit capuchon (32) peut être raccordé de manière amovible avec ladite tige de contrôle (16) au moyen d'un écrou cylindrique (28), dont le trou fileté est mis en prise avec une queue filetée (17a) prévue au niveau de l'extrémité externe (17) de ladite tige de contrôle (16), dans laquelle la tête (33) dudit écrou (28) est externe par rapport audit capuchon (32) et est plus petite que la section transversale de la partie carrée (34) du capuchon (32), et dans laquelle ledit écrou de fixation (28) est logé dans ledit capuchon (32) d'une manière non desserrée.

2. Soupape selon la revendication 1, **caractérisée en ce que** la partie inférieure (36) dudit capuchon (32) est en forme de cloche, et s'étend sans contact entre ladite partie carrée de contrôle (34) et le corps de soupape (2).

3. Soupape selon la revendication 1, **caractérisée en ce qu'**à l'extérieur du corps de soupape (2), on prévoit deux butées (46,47) adaptées pour loger respectivement une vis (46a, 47a) d'un composant de soupape en forme de boîte (48) réalisé par exemple à partir de plastique, et servant de moyens de positionnement pour positionner facilement une clé de contrôle spéciale, par exemple une clé télescopique, pour des profondeurs d'installation importantes.
